**Europäisches Patentamt**

**European Patent Office**

**Office européen des brevets**

(11) Veröffentlichungsnummer: **0 330 111**
A1

# (12) EUROPÄISCHE PATENTANMELDUNG

(21) Anmeldenummer: 89102871.4

(22) Anmeldetag: 20.02.89

(51) Int. Cl.⁴: **B23B 27/06**

(30) Priorität: 24.02.88 DE 3805730

(43) Veröffentlichungstag der Anmeldung:
30.08.89 Patentblatt 89/35

(84) Benannte Vertragsstaaten:
**AT DE ES FR GB IT SE**

(71) Anmelder: **Krauss, Helmut Dipl.-Ing.**
**Bartningallee 26**
**D-1000 Berlin 21(DE)**

(72) Erfinder: **Krauss, Helmut Dipl.-Ing.**
**Bartningallee 26**
**D-1000 Berlin 21(DE)**

(74) Vertreter: **LOUIS, PÖHLAU, LOHRENTZ &**
**SEGETH**
**Kesslerplatz 1 Postfach 3055**
**D-8500 Nürnberg(DE)**

(54) **Schneidwerkzeug zum konturengenauen Aussen- oder Inneneinstechdrehen.**

(57) Es wird ein Schneidwerkzeug zum konturengenauen Aussen-oder Inneneinstechdrehen beschrieben, das eine Schneidkante (12) mit einer Kontur aufweist, die in Längsrichtung des Schneidwerkzeugs (10) dem gewünschten axialen Profil eines zu bearbeitenden Werkstücks entspricht. An die Schneidkante (12) schliesst sich eine Spanfläche (16) an. An die Spanfläche (16) grenzt eine Spanablauffläche (24) an. Zur Verbesserung der Spanabnahme von einem zu bearbeitenden Werkstück und zur Verbesserung des Spanflusses entlang des Schneidwerkzeuges (10) kann die Spanablauffläche (24) mit einer durch die Schneidkante (12) und durch die zentrale Längsachse (18) des Schneidwerkzeugs (10) verlaufenden Bezugsebene (20) einen Winkel (w) einschliessen, der sich in axialer Richtung des Schneidwerkzeugs (10) ändert. Es ist jedoch auch möglich, dass die Spanablauffläche (24) mit der zentralen Längsachse (18) des Schneidwerkzeugs (10) einen spitzen Winkel (a) einschliesst. Desgleichen kann sich die Krümmung (1/r) des Übergangsabschnittes (22) zwischen der Spanfläch,e (16) und der Spanablauffläche (24) in axialer Richtung des Schneidwerkzeugs (10) ändern.

FIG.3

## Schneidwerkzeug zum konturengenauen Aussen- oder Inneneinstechdrehen.

Die Erfindung betrifft ein Schneidwerkzeug zum konturengenauen Aussen- oder Innenbearbeiten eines rotierenden Werkstücks durch Einstechdrehen, mit einer Schneidkante, deren Kontur in Längsrichtung des Schneidwerkzeugs dem gewünschten axialen Profil des zu bearbeitenden Werkstücks entspricht, und mit einer an die Schneidkante anschliessenden, mit einer durch die Schneidkante und durch die zentrale Längsachse des Schneidwerkzeugs verlaufenden Bezugsebene einen Spanwinkel einschliessenden Spanfläche, an die sich eine Spanablauffläche anschliesst.

Ein derartiges Schneidwerkzeug ist bspw. aus der DE 36 12 180 A1 bekannt. Bei diesem bekannten Schneidwerkzeug kann sich der Spanwinkel in Längsrichtung der Schneidkante des Schneidwerkzeugs ändern. Bei einer anderen Ausbildung dieses bekannten Schneidwerkzeugs ist die Schneidkante im Bezug zur zentralen Drehachse des zu bearbeitenden Werkstücks geneigt. Ferner wird dort vorgeschlagen, den Spanwinkel vom jeweiligen Radius des Profils des zu bearbeitenden Werkstücks abhängig auszubilden. Durch diese Massnahme kann insbesondere die Schneidgenauigkeit infolge eines vergleichsweise guten Ausgleichs unvermeidlicher Lagerspiele erhöht, bzw. die Schnittgeschwindigkeit vergrössert werden. Da bei den bekannten Schneidwerkzeugen der eingangs genannten Art die Spanablauffläche zur zentralen Längsachse des Schneidwerkzeugs parallel ausgerichtet ist, liegen alle Abschnitts des von einem zu bearbeitenden Werkstück abgenommenen Schneidspans quasi gleichzeitig an der Spanablauffläche an, so dass der Spanfluss während des Einstechdrehvorgangs noch Wünsche offen lässt.

Deshalb liegt der Erfindung die Aufgabe zugrunde, ein Schneidwerkzeug der eingangs genannten Art zu schaffen, bei dem der Spanfluss weiter verbessert ist.

Diese Aufgabe kann erfindungsgemäss dadurch gelöst werden, dass die Spanablauffläche mit der durch die Schneidkante und durch die zentrale Längsachse des Schneidwerkzeugs verlaufenden Bezugsebene einen Winkel einschliesst, der sich in axialer Richtung des Schneidwerkzeugs ändert. Bei einer solchen Ausbildung des Schneidwerkzeugs verläuft zwar die Spanablauffläche wie bei den bekannten Schneidwerkzeugen parallel zur zentralen Längsachse des Schneidwerkzeugs, so dass die verschiedenen Abschnitte des während des Einstechedrehvorgangs von einem zu bearbeitenden Werkzeugstück abgenommenen Schneidspans ebenfalls gleichzeitig gegen den zur Spanfläche benachbarten Abschnitt der Spanablauffläche anlaufen, dort jedoch nicht nur in Richtung der Spanablauffläche umgelenkt werden, sondern gleichzeitig infolge des sich ändernden Winkels der Spanablauffläche relativ zur genannten Bezugsebene auch in Längsrichtung des Schneidwerkzeugs abgelenkt werden. Durch diese Komponentenzerlegung der Bewegung des Schneidspanes ergibt sich eine Verbesserung des Spanflusses entlang des Schneidwerkzeugs, so dass die Einstech- bzw. Schnittgeschwindigkeit erhöht werden kann.

Die der Erfindung zugrundeliegende Aufgabe kann auch dadurch gelöst werden, dass die Spanablauffläche gegen die Längsrichtung des Werkzeugs schrägverlaufend angeordnet ist und mit der zentralen Längsachse des Schneidwerkzeugs einen spitzen Winkel einschliesst. Insbesondere durch eine derartige Ausbildung des Schneidwerkzeugs ergibt sich der Vorteil, dass unterschiedliche Abschnitte des von einem zu bearbeitenden Werkstück während des Einstechdrehens abgenommenen Spans zu verschiedenen Zeiten gegen die Spanfläche fliessen, wodurch der Span nicht nur entlang der Spanfläche in radialer Richtung, sondern gleichzeitig auch in axialer Richtung des Schneidwerkzeugs umgelenkt wird. Der abgenommende Span erhält somit eine Drallbewegung, wodurch der Spanfluss verbessert wird.

Bei einem Schneidwerkzeug der eingangs genannten Art, bei dem der Übergangsabschnitt zwischen der Spanfläche und der Spanablauffläche konkav gekrümmt ist, kann die der Erfindung zugrundeliegende Aufgabe auch dadurch gelöst werden, dass die Krümmung des Übergangsabschnittes sich in axialer Richtung des Schneidwerkzeugs ändert. Auch auf diese Weise ist es möglich, die Spanflussrichtung in eine radiale Komponente entlang der Spanablauffläche und gleichzeitig in eine axiale Komponente in Längsrichtung des Schneidwerkzeugs zu zerlegen, so dass der von einem zu bearbeitenden Werkstück abgenommene Span eine Drallbewegung erfährt, durch die der Spanabfluss verbessert wird.

Weitere Einzelheiten, Merkmale und Vorteile ergeben sich aus der nachfolgenden Beschreibung von Ausführungsbeispielen des erfindungsgemässen Schneidwerkzeugs zum konturengenauen Einstechdrehen. Es zeigt.

Fig. 1 eine Seitenansicht eines abschnittweise dargestellten Schneidwerkzeugs zum konturengenauen Einstechdrehen,

Fig. 2 einen Schnitt durch das Schneidwerkzeug gemäss Figur 1 entlang der Schnittlinie II-II in einem vergrösserten Maßstab,

Fig. 3 eine Ansicht einer zweiten Ausführungsform des Schneidwerkzeugs von oben,

Fig. 4 einen Schnitt durch das Schneidwerkzeug gemäss Figur 3 entlang der Schnittlinie IV-IV,

Fig. 5 einen Schnitt durch eine dritte Ausführungsform des Schneidwerkzeugs zum konturengenauen Einstechdrehen, und

Fig. 6 einen Schnitt durch eine vierte Ausführungsform des Schneidwerkzeugs zum konturengenauen Einstechdrehen.

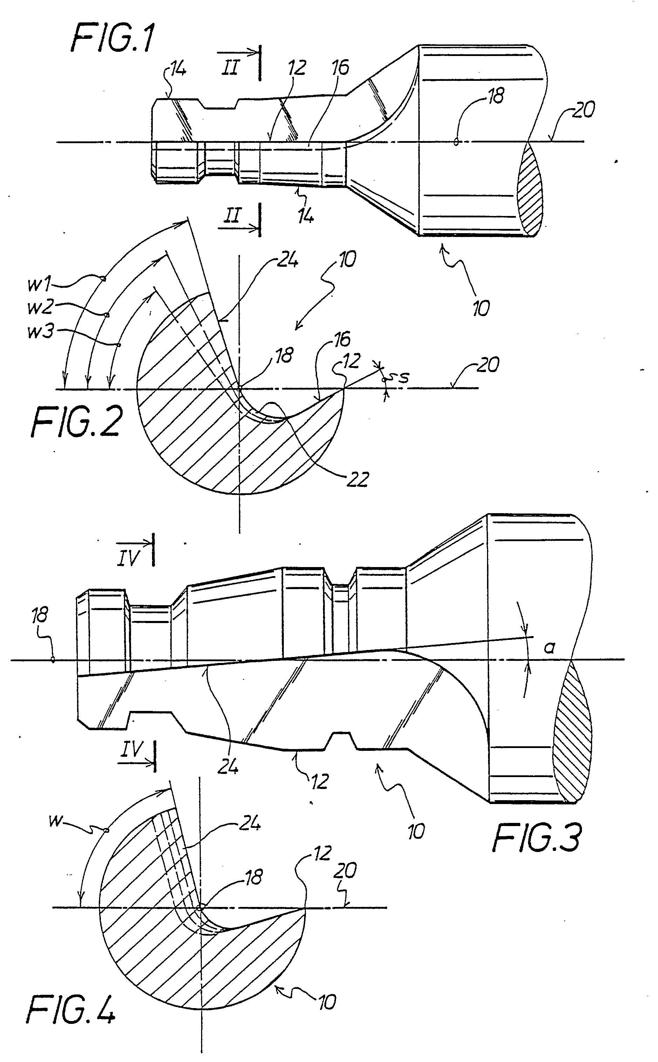

Die Figuren 1 und 2 zeigen eine erste Ausführungsform des Schneidwerkzeugs 10 zum konturengenauen Einstechdrehen, das eine Schneidkante 12 mit einer dem gewünschten Profil eines (nicht dargestellten) zu bearbeitenden Werkstücks entsprechenden Kontur aufweist. Diese Kontur 14 ist in Figur 1 nicht entlang der Schneidkante 12 sichtbar, sondern entlang des Profils des Schneidwerkzeugs 10. An die Schneidkante 12 schliesst sich unmittelbar eine Spanfläche 16 an, die mit einer sich durch die Schneidkante 12 und die zentrale Längsachse 18 erstreckenden Bezugsebene 20 einen Spanwinkel s einschliesst (sh. Figur 2). Die Bezugsebene 20 ist sowohl in Figur 1 als auch in Figur 2 zur Zeichnungsebene senkrecht ausgerichtet.

An die Spanfläche 16 schliesst sich nach einem konkav gekrümmten Übergangsabschnitt 22 eine Spanablauffläche 24 an. In dem in den Figuren 1 und 2 dargestellten Ausführungsbeispiel des Schneidwerkzeugs 10 schliesst die Spanablauffläche 24 mit der Bezugsebene 20 Winkel ein, die sich in axialer Richtung des Schneidwerkzeugs, d.h. entlang der zentralen Längsachse 18 des Schneidwerkzeugs 10 ändern. In Figur 2 sind drei derartige Winkel w1 ,w2 und w3 dargestellt. Auf diese Weise soll verdeutlicht werden, dass die Spanablauffläche 24 an drei verschiedenen Orten in Richtung der zentralen Längsachse 18 des Schneidwerkzeugs 10 verschiedene Winkel wi aufweist. Bei dieser Ausbildung des Schneidwerkzeugs 10 ändert sich somit die Neigung der Spanablauffläche 24 in Längsrichtung der zentralen Längsachse 18 des Schneidwerkzeugs 10, wodurch der von einem (nicht dargestellten) zu bearbeitenden Werkstück abgenommene Schneidspan eine Drallbewegung entlang der geneigten Spanablauffläche 24 erfährt. Durch diese Drallbewegung wird der Spanabfluss vom zu bearbeitenden Werkstück bzw. vom Schneidwerkzeug verbessert. Dadurch ist es möglich, das Schneidwerkzeug bei höheren Einstech- d.h. Schneidgeschwindigkeiten zu verwenden.

Die Figuren 3 und 4 zeigen eine Ausbildung des Schneidwerkzeugs 10, bei dem die Spanablauffläche 24 in Bezug zur in Verbindung mit den Figuren 1 und 2 beschriebenen Bezugsebene 20 eine konstante Winkel w einschliesst, bei der jedoch die Spanablauffläche 24 -wie aus Figur 3 ersichtlich ist- gegen die Längsrichtung des Werkzeugs, d.h. gegen die zentrale Längsachse 18 schrägverlaufend angeordnet ist und mit der zentralen Längsachse 18 des Schneidwerkzeugs 10 einen spitzen Winkel a einschliesst. Mit der Bezugsziffer 12 ist auch in den Figuren 3 und 4 die Schneidkante bezeichnet, deren Kontur in Längsrichtung des Schneidwerkzeugs 10, wie aus Figur 3 ersichtlich ist, dem gewünschten axialen Profil des (nicht dargestellten) zu bearbeitenden Werkstücks entpricht.

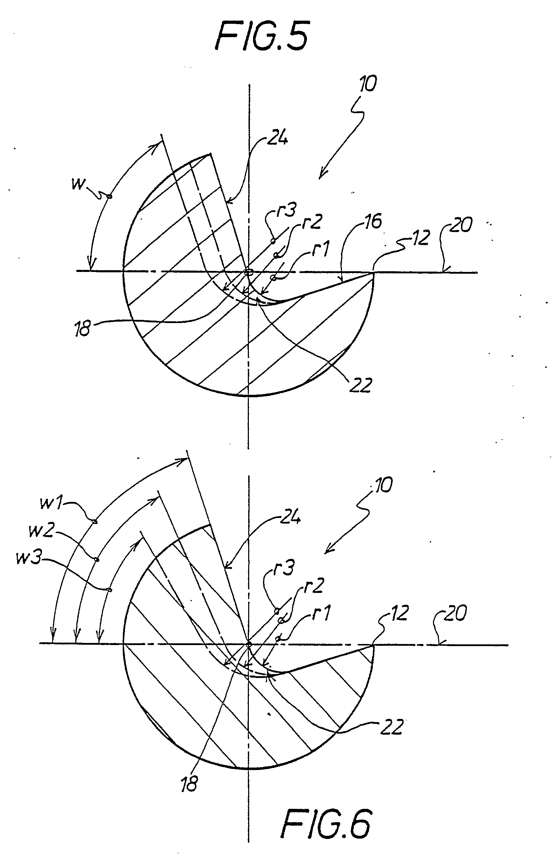

Figur 5 zeigt einen Querschnitt durch ein Schneidwerkzeug 10 mit einer Schneidkante 12 und einer sich an die Schneidkante 12 unmittelbar anschliessenden Spanfläche 16, an die sich nach einem konvex gekrümmten Übergangsabschnitt 22 eine Spanablauffläche 24 anschliesst. Bei dieser Ausbildung des Schneidwerkzeugs 10 schliesst die Spanablauffläche 24 mit der durch die Schneidkante 12 und durch die zentrale Längsachse 18 hindurch verlaufenden Bezugsebene 20 einen konstanten Winkel w ein. Bei der in Figur 5 dargestellten Ausbildung des Schneidwerkzeugs 10 ändert sich die Krümmung, d.h. der Krümmungsradius des konkav ausgebildeten Übergangsabschnittes 22 in axialer Richtung des Schneidwerkzeugs 10. In Figur 5 sind drei Krümmungsradien r1, r2 und r3 des Übergangsabschnittes 22 angedeutet, die an voneinander verschiedenen Orten des Schneidwerkzeugs 10 in Richtung der zentralen Längsachse 18 gegeben sind.

Figur 6 zeigt eine andere Ausbildund des Schneidwerkzeugs 10 in einem Schnitt, wobei sich diese Ausbildung des Schneidwerkzeugs 10 von der in Figur 5 dargestellten Ausbildung des Schneidwerkzeugs 10 dadurch unterscheidet, dass nicht nur die Krümmung, d.h. der Krümmungsradius des konkav ausgebildeten Übergangsabschnittes 22 sich in Richtung der zentralen Längsachse 18 des Schneidwerkzeugs ändert, sondern gleichzeitig auch der Winkel w, den die Spanfläche 24 an einem bestimmten Ort in Richtung der zentralen Längsachse 18 mit der durch die Schneidkante 12 und durch die zentrale Längsachse 18 verlaufenden Bezugsebene 20 einschliesst. In Figur 6 sind drei Orte entlang der zentralen Längsachse 18 angedeutet, an denen die Spanfläche 24 mit der Bezugsebene 20 Winkel w1, w2 und w3, sowie der zugehörige Übergangsabschnitt 22 Krümmungsradien r1, r2 und r3 aufweisen.

Durch alle diese Ausbildungen des Schneidwerkzeugen 10 ergibt sich ein Spanfluss mit einem Drall, wodurch nicht nur der Spanfluss vebessert ist, sondern gleichzeitig auch die Möglichkeit gegeben ist, das Schneidwerkzeug 10 bei relativ hohen Schnittgeschwindigkeiten, d.h. bei relativ hohen Einstech-Vorschubgeschwindigkeiten anzuwenden.

**Ansprüche**

1. Schneidwerkzeug zum konturengenauen Aussen- oder Innenbearbeiten eines rotierenden Werkstücks durch Einstechdrehen, mit einer Schneidkante (12) deren Kontur in Längsrichtung des Schneidwerkzeugs (10) dem gewünschten axialen Profil des zu bearbeitenden Werkstücks entspricht, und mit einer an die Schneidkante (12) anschliessenden, mit einer durch die Schneidkante (12) und durch die zentrale Längsachse (18) des Schneidwerkzeugs (10) verlaufenden Bezugsebene (20) einen Spanwinkel (s) einschliessenden Spanfläche (16), an die sich eine Spanablauffläche (24) anschliesst, **dadurch gekennzeichnet,** dass die Spanablauffläche (24) mit der Bezugebene (20) einen Winkel (w) einschliesst, der sich in axialer Richtung des Schneidwerkzeugs (10) ändert.

2. Schneidwerkzeug zum konturengenauen Aussen- oder Innenbearbeiten eines rotierenden Werkstücks durch Einstechdrehen, mit einer Schneidkante (12), deren Kontur in Längsrichtung des Schneidwerkzeugs (10) dem gewünschten axialen Profil des zu bearbeitenden Werkstücks entspricht und mit einer an die Schneidkante (12) anschliessenden, mit einer durch die Schneidkante (12) und durch die zentrale Längsachse (18) des Schneidwerkzeugs (10) verlaufenden Bezugsebene (20) einen Spanwinkel (s) einschliessenden Spanfläche (16), an die sich eine Spanablauffläche (24) anschliesst,
**dadurch gekennzeichnet,**
dass die Spanablauffläche (24) gegen die Längsrichtung des Schneidwerkzeugs (10) schrägverlaufend angeordnet ist und mit der zentralen Längsachse (18) des Schneidwerkzeugs (10) einen spitzen Winkel (a) einschliesst.

3. Schneidwerkzeug zum konturengenauen Aussen- oder Innenbearbeiten eines rotierenden Werkstücks durch Einstechdrehen mit einer Schneidkante (12), deren Kontur in Längsrichtung des Schneidwerkzeugs (10) dem gewünschten axialen Profil des zu bearbeitenden Werkstücks entspricht,und mit einer an die Schneidkante (12) anschliessenden, mit einer durch die Schneidkante (12) und durch die zentrale Längsachse (18) des Schneidwerkzeugs (10) verlaufenden Bezugsebene (20) eine Spanwinkel (s) einschliessenden Spanfläche (16), an die sich eine Spanablauffläche (24) anschliesst, wobei der Übergangsabschnitt (22) zwischen der Spanfläche (16) und der Spanablauffläche (24) konkav gekrümmt ist, **dadurch gekennzeichnet,** dass die Krümmung (1/r) des Übergangsabschnittes (22) sich in axialer Richtung des Schneidwerkzeugs (10) ändert.

*FIG.1*

*FIG.2*

*FIG.3*

*FIG.4*

*FIG.5*

*FIG.6*

Europäisches
Patentamt

**EUROPÄISCHER RECHERCHENBERICHT**

Nummer der Anmeldung

| | **EINSCHLÄGIGE DOKUMENTE** | | EP 89102871.4 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) | |
| D,A | DE - A1 - 3 612 180 (H.WILLY KRAUSS GMBH & CO.) <br> * Gesamt * <br> -- | 1,2,3 | B 23 B 27/06 | |
| A | US - A - 2 632 233 (LUERS) <br> * Gesamt * <br> ---- | 1,2,3 | | |
| | | | RECHERCHIERTE SACHGEBIETE (Int. Cl.4) | |
| | | | B 23 B 27/00 | |
| | Der vorliegende Recherchenbericht wurde für alle Patentansprüche erstellt. | | | |

| Recherchenort | Abschlußdatum der Recherche | Prüfer |
|---|---|---|
| WIEN | 20-04-1989 | BRÄUER |